# EUROPÄISCHE PATENTSCHRIFT

(11) **EP 3 274 163 B1**
(45) Veröffentlichungstag und Bekanntmachung des Hinweises auf die Patenterteilung: **05.05.2021**
(21) Anmeldenummer: 16725350.9
(22) Anmeldetag: 24.03.2016
(51) Int. Cl.: B32B 3/10

(54) **GEOTEXTIL**
GEOTEXTILE
GEOTEXTILE

(30) Priorität: 26.03.2015 DE 102015104681
(43) Veröffentlichungstag der Anmeldung: 31.01.2018
(73) Patentinhaber: Huesker Synthetic GmbH, 48712 Gescher (DE)
(72) Erfinder: WILKE, Markus, 48653 Coesfeld (DE)
(74) Vertreter: Tarvenkorn, Oliver
(86) Internationale Anmeldenummer: PCT/DE2016/100146
(87) Internationale Veröffentlichungsnummer: WO 2016/150435

(56) Entgegenhaltungen:
- WO-A2-2007/050540
- GB-A- 2 297 343

## Beschreibung

Die Erfindung betrifft ein Geotextil-Grundgewebe mit einer Schlauchanschlusseinheit zum Einführen in oder Verbinden eines Spülschlauches mit einer Befüllöffnung in einem Geotextil-Grundgewebe oder zum Einführen des Spülschlauches darin, wenigstens umfassend einen Flanschring, einen Stützring sowie Verbindungsmitteln zur Verbindung des Flanschringes mit dem Stützring unter Einschluss des dazwischen liegenden Geotextil-Grundgewebes.

Geotextilien werden im Tief- und Ingenieurbau in zahlreichen Anwendungsfeldern eingesetzt. Günstige Eigenschaften sind die hohe mechanische Zugfestigkeit und die Durchlässigkeit für Wasser. Hieraus ergeben sich als Anwendungsfälle unter anderem die Entwässerung von Schlämmen, die Uferbefestigung oder die Verwendung als Wellenbrecher im Küstenschutz. In diesen Anwendungsfällen werden sehr große, insbesondere schlauchförmige Behältnisse aus Geotextilien gebildet, die durch eine Befüllöffnung über Spülschläuche mit einer Suspension befüllt werden. Die Feststoffe der Suspension sedimentieren innerhalb der Behältnisse, und das darin enthaltene Wasser kann durch die geotextile Wand entweichen. Die Enden der Spülschläuche werden entweder durch eine Befüllöffnung hindurch gesteckt und werden so direkt ins Innere des Behältnisses geführt, oder diese sind mit Kupplungsmitteln versehen, die mit kompatiblen Kupplungsmitteln an der Befüllöffnung verbunden werden. Bei einem Durchmesser der Behältnisse von mehreren Metern treten beim Befüllen hohe hydrostatische Drücke auf, die zu hohen Zugspannungen im Mantel führen. Zwar sind Geotextilien ohne weiteres in der Lage, diese Zugspannungen aufzunehmen, jedoch stellen die Befüllöffnungen Schwachstellen dar. In jedem Fall ist es erforderlich, die beträchtlichen Zugspannungen im Geotextil um die Befüllöffnung herumzuleiten und ein Ein- und Weiterreißen des Geotextils von der Befüllöffnung her zu verhindern.

In der US 8 088 117 B ist eine gattungsgemäße Schlauchanschlusseinheit für einen flexiblen Behälter beschrieben. Hierbei ist vorgesehen, den Befüllschlauch endseitig mit einem festen Stutzen zu versehen, der einen Flansch besitzt. Um die Befüllöffnung in dem textilen Gewebeabschnitt herum ist ein Flanschring gelegt. Dieser kann zum einen mit dem Flansch des Schlauchstutzens verbunden werden, zum anderen wirkt er mit einem Stützring auf der anderen Seite des Gewebeabschnitts zusammen. Durch Öffnungen im Gewebe sind Schrauben hindurch geführt, um den Flanschring und den Stützring miteinander zu verbinden. Um zu verhindern, dass sich der um die Befüllöffnung herum erstreckende Randabschnitt des Gewebes aus der Klemmung zwischen Flanschring und Stützring herauszieht, sind elastomere Zusatzringe vorgesehen, die die reibschlüssige Klemmung zwischen Flansch- und Stützring verstärken sollen. Angesichts der hohen Zugspannungen in suspensionsbefüllten Behältnissen kann die reinschlüssige Einspannung des Geotextilabschnitts jedoch versagen, wobei das Gewebe zunächst noch formschlüssig an den Schrauben gehalten würde. Durch die hohe Spannungskonzentration an den Schrauben käme es dann aber bald zum Riss im Geotextil.

Die US 6 623 214 B1 beschreibt die Verwendung eines geotextilen Schlauches im Küstenschutz und beschreibt ein Reparaturset, mit dem bereits entstandene Risse aufgefangen und ein Weiterreißen verhindert werden soll. Eine Befüllöffnung ist nicht vorgesehen; vielmehr wird als Gegenstück zu einem Flanschring ein Deckel verwendet. Der Flanschring und der Deckel werden ebenfalls über Schrauben miteinander verbunden, die durch Öffnungen im Gewebe gesteckt sind. Das Gewebe wird zwischen Flanschring und Deckel eingeklemmt, wobei auch hier reibungserhöhende Zusatzringe vorgesehen sind. Auch hier besteht der Nachteil, dass die reibschlüssige Festlegung versagen kann und dass eine formschlüssige Festlegung über die Schrauben aufgrund der Spannungskonzentration an den Ausnehmungen im Gewebe zum Ein- und Weiterreißen führt.

Die Aufgabe der vorliegenden Erfindung besteht somit darin, ein Geotextil-Grundgewebe mit einer -Schlauchanschlusseinheit der eingangs genannten Art so zu verbessern, dass noch höhere Zugspannungen sicher aufgenommen werden können und ein Einreißen des Geotextils an der Befüllöffnung verhindert wird.

Diese Aufgabe wird gemäß der vorliegenden Erfindung durch ein Geotextil-Grundgewebe mit einer Schlauchanschlusseinheit mit den Merkmalen des Anspruchs 1 gelöst.

Dabei wird die Einfüllöffnung nicht frei geschnitten, sondern das dort vorhandene Gewebe wird in Segmente geteilt und umgeschlagen. Bei einer kreisrunden Einfüllöffnung etwa werden tortenstückartige Kreissegmente gebildet. In der umgeschlagenen Falte des Geotextils wird ein Kederelement eingelegt. Das Kederelement wird an einer am Außenumfang liegenden Kante des Flanschrings und/oder des Stützrings formschlüssig zurückgehalten, während die Kombination aus Flansch- und Stützring die textilen Bereiche in der Falte aufeinander klemmt. Die dortige Klemmung wirkt wie im Stand der Technik auch. Sollten jedoch die Reibungskräfte dort nicht ausreichend sein, kommt es zum Kriechen des Geotextils. Anders als im Stand der Technik führt der Kriechvorgang aber dazu, dass das Textil das Kederelement an die Kante zieht, an der es zurückgehalten wird. Hier entsteht ein neuer Reibschluss zwischen Anlagekante, textilem Abschnitt und Kederelement. Zugleich wird der textile Abschnitt in der Umschlingung an das Kederelement herangezogen, so dass auch hier beträchtliche Reibkräfte über den Umschlingungswinkel des Geotextils am Kederelement entstehen.

Somit setzen bei Versagen der Grundverbindung an der Klemmung zwischen Flansch- und Stützring die geschilderten Mechanismen ein, die das weitere Kriechen unterbinden und die Einspannung um die Befüllöffnung herum stabilisieren.

Als Kederelement kommen vorgefertigte Elemente in Frage, die bereits eine textile Annähkante besitzen. Alternativ zu der Verwendung eines vorgefertigten Kederelements kann ein Hohlsaum in Kombination mit einem eingelegten Seil, Kabel oder ähnlichem erfolgen. Die Wirkungsweise entspricht vollkommen dem vorher beschriebenen Kederelement. Der Einfachheit halber wird im Weiteren auf das Kederelement Bezug genommen. Günstig ist es, die Montage von Flansch- und Stützring unter Spannung des Geotextils vorzunehmen, um die Anlage des Textils an das Kederelement und des Kederelements an die Anschlagkante von vornherein vorzugeben und die Einspannung somit von vornherein zu verstärken.

Bei einer kreisrunden Befüllöffnung sollten wenigstens drei Segmente gebildet werden. Die Umschlagfalte ist als Sekante an einem ringförmigen Kederelement zu sehen, so dass das Gewebe dort in der Mitte der Umschlagfalte nicht in gleichem Maße anliegt wie an den Außenseiten. Je größer der Durchmesser ist, desto mehr Segmente sollten also gebildet werden, so dass die Umschlagfalte entsprechend kürzer ausfällt und sich besser an die Kreisform des Kederelements angleicht.

Möglich sind auch polygonale Ring- und Kederformen, die den Vorteil haben, dass jeder Abschnitt im Polygon eine gerade Kante hat und somit exakt mit dem Verlauf der Umschlagfalte in Übereinstimmung ist.

Als Flanschring wird ein ringförmiges Element bezeichnet, das wenigstens eine zur Befüllöffnung weisende Anlagekante besitzt, an welcher sich das vom Gewebe umschlungene Kederelement anlegen kann. Dies kann der Innenumfang des Flanschrings sein, kann aber auch eine andersartige Begrenzungskante sein, beispielweise an einer Nut, in der das Kederelement aufgenommen wird. Diese Nut kann entweder zentral innerhalb des Querschnitts des Flansch- oder Stützrings angeordnet sein, so dass das Kederelement vollständig verdeckt ist und von außen nicht sichtbar ist, oder auch zum Innenrand hin offen sein. Im letzteren Fall liegt das Kederelement zwar nicht vollständig eingefasst, aber zumindest nicht mehr frei innerhalb des lichten Querschnitts innerhalb der Ringe und ist damit bereits weitgehend vor Beschädigungen durch einen durch die Befüllöffnung eingeführten Schlauchstutzen geschützt.

Als Stützring wird ein Element bezeichnet, das zumindest ein Gegenlager zum Flanschring auf der anderen Seite des Gewebes bildet. Es können darin Durchgangsbohrungen zur Aufnahme der Schrauben vorgesehen sein oder auch Gewindebohrungen.

Der Stützring kann ebenfalls eine Anlagekante besitzen, und er kann sogar im Querschnitt identisch mit dem Flanschring sein, also quasi durch einen zweiten Flanschring gebildet werden. Das Kederelement kann in diesem Fall symmetrisch in Bezug auf die Trennebene angeordnet werden und stützt sich an beiden Ringen ab, so dass ein besonders gleichmäßiger Spannungsverlauf erreicht wird.

Die Schraubverbindung des Flanschrings mit dem Stützring kann in verschiedener Weise bewirkt werden, wie nachfolgend anhand der in den folgenden Zeichnungen dargestellten Ausführungsbeispiele erläutert wird. Die Figuren zeigen im Einzelnen:
- Fig. 1: eine an einem Geotextil-Grundgewebe montierte Geotextil-Schlauchanschlusseinheit in perspektivischer Ansicht von außen
- Fig. 2: eine Geotextil-Schlauchanschlusseinheit nach einem ersten Montageschritt, in Draufsicht,
- Fig. 3.: eine Geotextil-Schlauchanschlusseinheit nach einem zweiten Montageschritt, in Draufsicht,
- Fig. 4a -4c: Geotextil-Schlauchanschlusseinheiten mit verschiedenen Ausbildungen eines Flanschrings, jeweils in Schnittansicht.

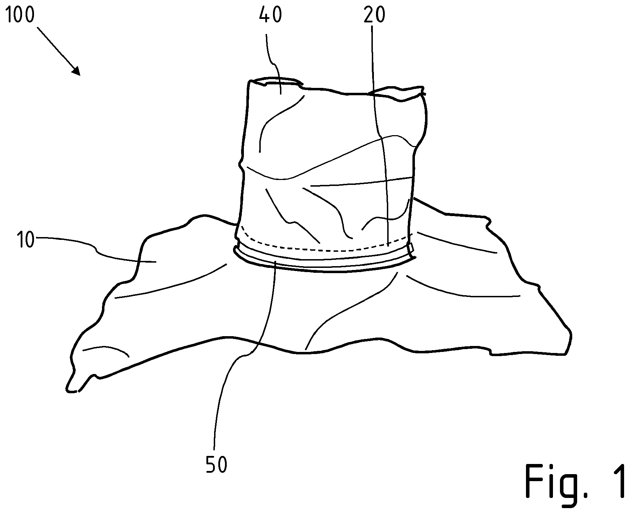

Figur 1 zeigt eine Geotextil-Schlauchanschlusseinheit 100 an einem geotextilen Behältnis, von dem ein Abschnitt eines Geotextil-Grundgewebes 10 erkennbar ist. Die Geotextil-Schlauchanschlusseinheit 100 umfasst einen außen an dem Grundgewebe 10 angebrachten Flanschring 20, der hier durch einen Schlauchführungsstutzen 40 überdeckt ist. Der Schlauchführungsstutzen 40 ist über eine Schelle 50 an dem Flanschring 20 befestigt und besteht ebenfalls aus einem Geotextil. Er dient dazu, das Einführen eines Spülschlauches in die Befüllöffnung zu erleichtern und den Spülschlauch daran zu fixieren. Hierzu kann der Spülschlauch beispielsweise mit einem um den Schlauchführungsstutzen 40 gelegten oder dort eingeflochtenen Spanngurt gesichert werden.

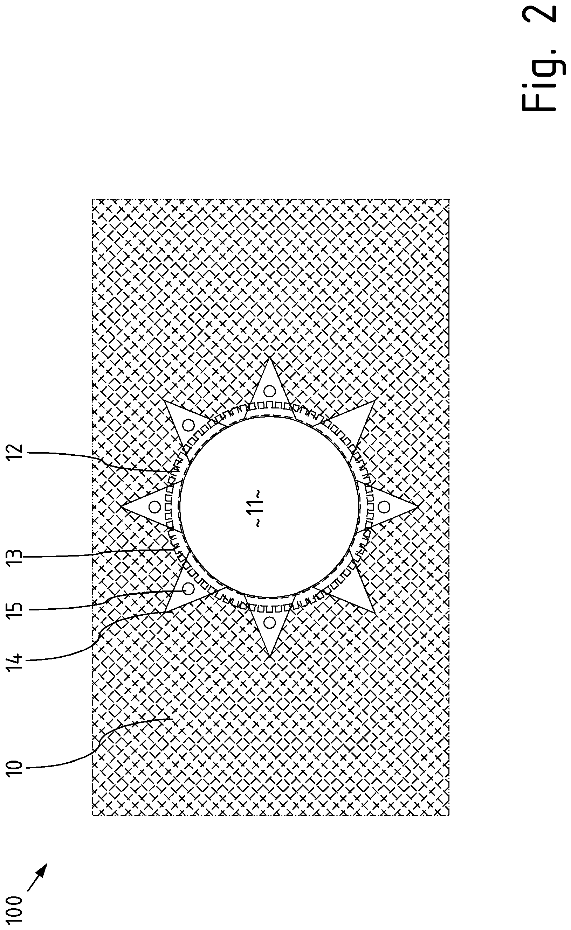

Figur 2 zeigt eine teilweise montierte Geotextil-Schlauchanschlusseinheit 100. Die Befüllöffnung 11 ist bereits frei geschnitten, wodurch mehrere Segmente 14 gebildet sind. Diese sind jeweils nach außen auf das geotextile Grundgewebe 10 umgelegt und mit einer Naht 13 daran gesichert, wobei sie jeweils mit einem Umschlingungswinkel von 180° und mehr um ein Kederelement 12 geführt sind.

In jedem Segment 14 ist bei der hier dargestellten Ausführungsform eine Öffnung 15 eingebracht, ebenso in dem darunter liegenden Grundgewebe 10, so dass z. B. eine Schraube als Verbindungsmittel durchgesteckt werden kann. Die Befüllöffnung 11 wird somit von dem in das Gewebe 10 eingehüllten Kederelement 12 umfasst.

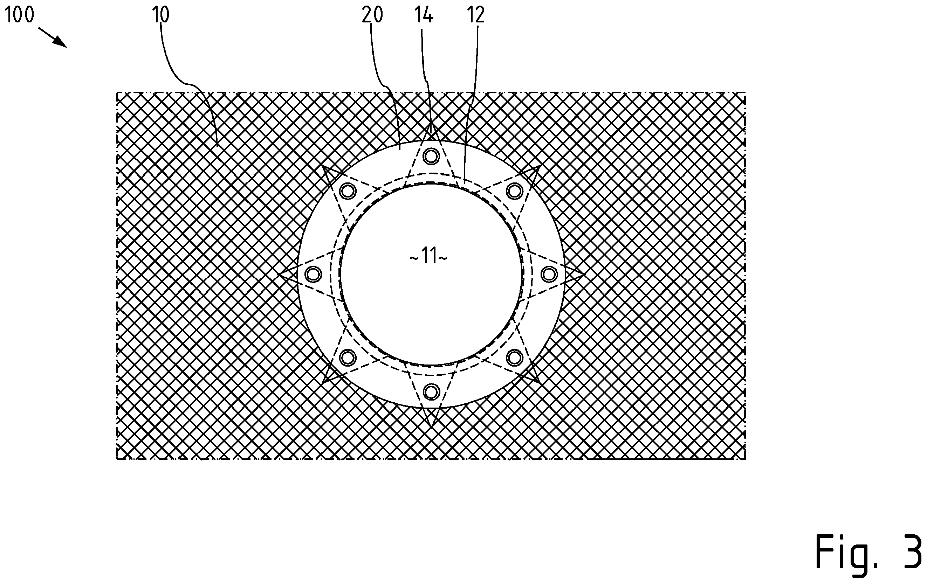

Bei der Darstellung in Figur 3 ist der Flanschring 20 an der äußeren Oberfläche des Gewebes 10 aufgesetzt und überdeckt nun das Kederelement 12. Innen liegt die Befüllöffnung 11 frei. Schrauben stellen eine Verbindung mit einem Stützring her, der an der abgewandten Oberfläche des Grundgewebes 10 positioniert ist.

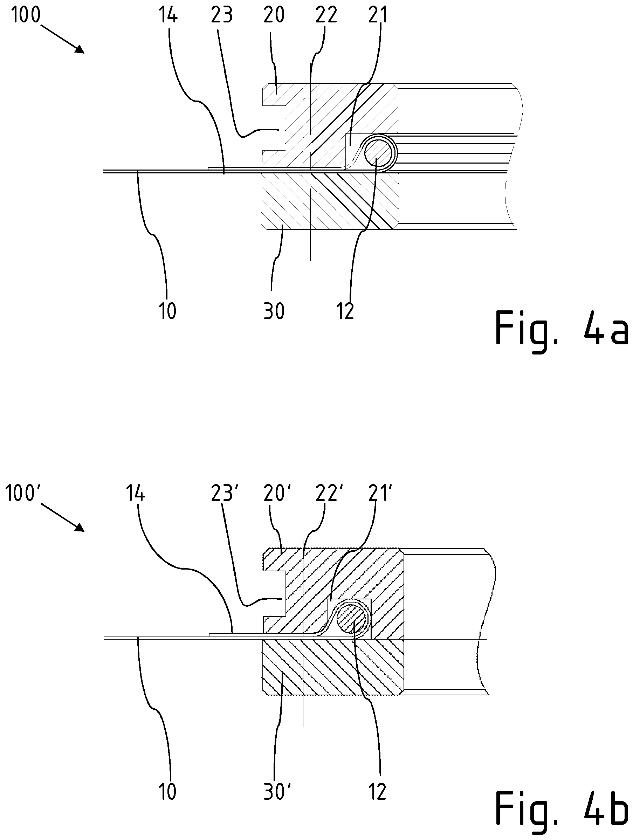

Figur 4a zeigt einen Schnitt durch eine erste Ausführungsform einer Geotextil-Schlauchanschlusseinheit 100. Erkennbar ist der Übergang des Grundgewebeabschnitts 10 in ein Segment 14, das das Kederelement 12 umschließt und dann mit dem Grundgewebe 10 zusammen zwischen Flanschring 20 und Stützring 30 eingeklemmt ist. Die Verschraubung 22 liegt auf einem Teilkreis außerhalb des Kederelements 12. Das Kederelement 12 ist in einer zum Innenumfang offenen Nut 21 (vgl. Fig. 4a) des Flanschrings 20 formschlüssig festgelegt. An der äußeren Umfangsfläche ist eine weitere Nut 23 eingebracht, um darin über eine Schlauchschelle 50 oder dergleichen den Schlauchführungsstutzen 40 fixieren zu können.

Figur 4b zeigt einen Schnitt durch eine Geotextil-Schlauchanschlusseinheit 100' gemäß einer zweiten Ausführungsform. Hierbei ist ein Flanschring 20' vorgesehen, der an seiner unteren Kontaktfläche mit dem Grundgewebe 10 eine Nut 21' aufweist. Eine äußere Begrenzungskante in der Nut 21' dient der Anlage und der formschlüssigen Festlegung des Kederelements 12. Der über die Nut 21' hinweg führende Teil des Flanschrings 20' überdeckt das Kederelement 12 vollständig, so dass dieses einschließlich der Gewebeabschnitte 10, 14, die es umschlingen, besser vor mechanischem Abrieb durch einen in die Befüllöffnung 11 eingeführten Schlauchstutzen geschützt ist. Die Verbindung der Ringe 20', 30 und die damit einhergehende Klemmung der Segmente 14 an das Grundgewebes 10 wird über eine Verschraubung 22' bewirkt, die auf einem Teilkreis außerhalb des Kederelements 12 angeordnet ist.

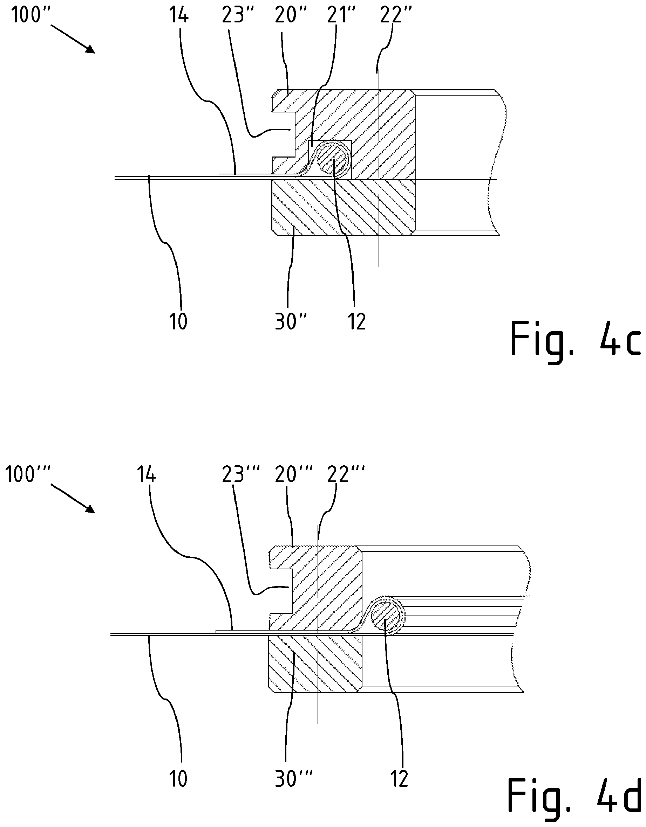

Eine dritte Ausführungsform einer Geotextil-Schlauchanschlusseinheit 100" ist in Figur 4c gezeigt. Wieder ist im Flanschring 20" an der Unterseite eine Nut 21" zur Aufnahme des Kederelements 12 eingebracht. Diese ist allerdings weiter nach außen versetzt, während der Teilkreis für die Verschraubung 22" nun innerhalb des ringförmigen Kederelements 12 liegt. Damit wird zwar die lichte Öffnungsweite der Befüllöffnung 11 etwas reduziert. Der Vorteil der innen liegenden Verschraubung 22" besteht aber darin, dass im Grundgewebe 10" und in den Segmenten 14" auf Durchbrüche zur Durchführung von Schrauben vollständig verzichtet werden kann und eine Materialschwächung vermieden wird.

Figur 4d zeigt einen Schnitt durch eine vierte Ausführungsform einer Geotextil-Schlauchanschlusseinheit 100"'. Erkennbar ist der Übergang des Grundgewebeabschnitts 10 in ein Segment 14, das das Kederelement 12 umschließt und dann mit dem Grundgewebe 10 zusammen zwischen Flanschring 20''' und Stützring 30''' eingeklemmt ist. Bei der hier gezeigten Ausführungsform sind sowohl der Flanschring 20''' wie auch der Stützring 30''' mit einer zum Gewebe 10 gewandten ebenen Oberfläche ausgebildet. Die Verschraubung 22 liegt auf einem Teilkreis außerhalb des Kederelements 12. Das Kederelement 12 liegt innerhalb der Öffnung des Flanschrings 20''' und ist an der inneren Umfangsfläche 24 des Flanschrings 20 formschlüssig festgelegt. An der äußeren Umfangsfläche ist wiederum eine Nut 23''' eingebracht, um darin über eine Schlauchschelle 50 oder dergleichen den Schlauchführungsstutzen 40 fixieren zu können.

## Patentansprüche

1. Geotextil-Grundgewebe (10) mit einer Befüllöffnung (11) umfassend eine Schlauchanschlusseinheit (100; 100'; 100"; 100''') zum Einführen in oder Verbinden eines Spülschlauches mit der Befüllöffnung (11) in dem Geotextil-Grundgewebe (10) oder zum Einführen des Spülschlauches darin, die Schlauchanschlusseinheit (100, 100', 100", 100''') wenigstens umfassend einen Flanschring (20; 20'; 20"; 20'''), einen Stützring (30) sowie Verbindungsmittel (22) zur Verbindung des Flanschringes (20; 20'; 20"; 20''') mit dem Stützring (30; 30'; 30"; 30''') unter Einschluss des dazwischen liegenden Geotextil-Grundgewebes (10),
**dadurch gekennzeichnet,**
- **dass** das Geotextil-Grundgewebe (10) im Bereich der Befüllöffnung (11) in wenigstens zwei Segmente (14) aufgeteilt ist, wobei jedes Segment (14) über wenigstens ein Kederelement (12) nach außen umgelegt ist
- und **dass** das Kederelement (12) an wenigstens einer Anlagekante am Flanschring (20; 20'; 20"; 20''') und/oder am Stützring (30; 30'; 30"; 30''') formschlüssig festgelegt ist.

2. Geotextil-Grundgewebe (10) nach Anspruch 1, **dadurch gekennzeichnet, dass** alle Segmente (14) ein gemeinsames, ringförmiges Kederelement (12) umschließen.

3. Geotextil-Grundgewebe (10) nach Anspruch 1, **dadurch gekennzeichnet, dass** mehrere Kederelemente vorhanden sind, die jeweils von einem oder mehreren Segmenten umschlossen sind.

4. Geotextil-Grundgewebe (10) nach Anspruch 2 oder 3, **dadurch gekennzeichnet, dass** das Kederelement (12) aus einem Kunststoffprofil mit einer Annähfahne gebildet ist, wobei die Annähfahne nach außen weisend angeordnet und in eine Vielzahl von Einzelsegmenten (14) aufgeteilt ist, die mit dem Geotextil-Grundgewebe (10) vernäht sind.

5. Geotextil-Grundgewebe (10) nach einem der Ansprüche 1 bis 4, **dadurch gekennzeichnet, dass** der Flanschring (20; 20'; 20''') und/oder der Stützring (30; 30';30''') über außerhalb des Umfangs des wenigstens einen Kederelements (12) angeordnete und das Geotextil-Grundgewebe (10) durchdringende Verbindungsmittel miteinander verbunden sind.

6. Geotextil-Grundgewebe (10) nach einem der Ansprüche 1 bis 4, **dadurch gekennzeichnet, dass** der Flanschring (20") und/oder der Stützring (30") über innerhalb des Kederelements (12) angeordnete Verbindungsmittel miteinander verbunden sind.

7. Geotextil-Grundgewebe (10) nach einem der Ansprüche 1 bis Anspruch 6, **dadurch gekennzeichnet, dass** das wenigstens eine Kederelement (12) innerhalb des Innenumfangs des Flanschrings (20''') und/oder des Stützrings (30''') angeordnet ist und dass die Anlagekante durch den Innenumfang des Flanschrings (20) und/oder des Stützrings (30) gebildet ist.

8. Geotextil-Grundgewebe (10) nach einem der Ansprüche 1 bis 6, **dadurch gekennzeichnet, dass** das wenigstens eine Kederelement (12) wenigstens teilweise in einer Nut (21; 21'; 21") im Flanschring (20; 20'; 20") und/oder im Stützring (30; 30'; 30") angeordnet ist und dass die Anlagekante durch eine Begrenzungskante der Nut (21; 21'; 21") gebildet ist.

9. Geotextil-Grundgewebe (10) nach einem der vorhergehenden Ansprüche, **dadurch gekennzeichnet, dass** ein Schlauchführungsstutzen (40) an dem Flanschring (20; 20'; 20"; 20''') angebracht ist.

10. Geotextil-Grundgewebe (10) nach Anspruch 9, **dadurch gekennzeichnet, dass** der Schlauchführungsstutzen (40) aus einem Geotextil-Gewebe gebildet ist und dass der Flanschring (20; 20'; 20"; 20''') an seinem Außenumfang wenigstens eine äußere Nut (23; 23'; 23"; 23''') aufweist, in die ein Klemmring (50) zur Befestigung des Schlauchführungsstutzens (40) eingreift.

## Claims

1. Woven geotextile base fabric (10), having a filling opening (11) comprising a hose connector unit (100; 100'; 100''; 100''') for introducing into a rinsing hose or connecting a rinsing hose to the filling opening (11) in the woven geotextile base fabric (10), or for introducing the filling hose into said filling opening, the hose connector unit (100; 100'; 100''; 100''') at least comprising a flanged ring (20; 20'; 20''; 20'''), a support ring (30), as well as connecting means (22) for connecting the flanged ring (20; 20'; 20"; 20''') to the support ring (30; 30'; 30''; 30''') while enclosing the woven geotextile base fabric (10) lying therebetween,
**characterized in that**
- the woven geotextile base fabric (10) in the region of the filling opening (11) is divided into at least two segments (14), wherein each segment (14) is folded over towards the outside across at least one welt element (12), and **in that**
- the welt element (12) is established in a form-fitting manner on at least one bearing edge on the flanged ring (20; 20'; 20''; 20''') and/or on the support ring (30; 30'; 30"; 30''').

2. Woven geotextile base fabric (10) according to Claim 1, **characterized in that** all segments (14) enclose a common annular welt element (12).

3. Woven geotextile base fabric (10) according to Claim 1, **characterized in that** a plurality of welt elements which are in each case enclosed by one or more segments are present.

4. Woven geotextile base fabric (10) according to Claim 2 or 3, **characterized in that** the welt element (12) is formed from a plastics-material profile having a seam tab, wherein the seam tab is disposed so as to point outwards and is divided into a multiplicity of individual segments (14) which are stitched to the woven geotextile base fabric (10).

5. Woven geotextile base fabric (10) according to one of Claims 1 to 4, **characterized in that** the flanged ring (20; 20'; 20") and/or the support ring (30; 30'; 30'') are connected to one another by way of connecting means which are disposed outside the circumference of the at least one welt element (12) and penetrate the woven geotextile base fabric (10).

6. Woven geotextile base fabric (10) according to one of Claims 1 to 4, **characterized in that** the flanged ring (20'') and/or the support ring (30'') are connected to one another by way of connecting means which are disposed within the welt element (12).

7. Woven geotextile base fabric (10) according to one of Claims 1 to 6, **characterized in that** the at least one welt element (12) is disposed within the internal circumference of the flanged ring (20''') and/or of the support ring (30'''), and **in that** the bearing edge is formed by the internal circumference of the flanged ring (20) and/or of the support ring (30).

8. Woven geotextile base fabric (10) according to one of Claims 1 to 6, **characterized in that** the at least one welt element (12) is at least partially disposed in a groove (21; 21'; 21'') in the flanged ring (20; 20'; 20'') and/or in the support ring (30; 30'; 30''), and **in that** the bearing edge is formed by a delimitation edge of the groove (21; 21'; 21'').

9. Woven geotextile base fabric (10) according to one of the preceding claims, **characterized in that** a hose-guiding connector (40) is attached to the flanged ring (20; 20'; 20"; 20''').

10. Woven geotextile base fabric (10) according to Claim 9, **characterized in that** the hose-guiding connector (40) is formed from a woven geotextile fabric, and **in that** the flanged ring (20; 20'; 20"; 20''') on the external circumference thereof has at least one outer groove (23; 23'; 23"; 23''') in which a clamping ring (50) for fastening the hose-guiding connector (40) engages.

## Revendications

1. Tissu de fond géotextile (10) muni d'une ouverture de remplissage (11) comprenant une unité de raccordement de tuyau (100 ; 100' ; 100'' ; 100''') pour l'insertion dans ou la liaison d'un tuyau d'irrigation avec l'ouverture de remplissage (11) dans le tissu de fond géotextile (10) ou pour l'insertion du tuyau d'irrigation dans celle-ci, l'unité de raccordement de tuyau (100 ; 100' ; 100'' ; 100''') comprenant au moins un anneau de bridage (20 ; 20' ; 20'' ; 20'''), un anneau de support (30) et des moyens de liaison (22) pour la liaison de l'anneau de bridage (20 ; 20' ; 20'' ; 20''') avec l'anneau de support (30 ; 30' ; 30'' ; 30''') en incluant le tissu de fond géotextile (10) situé entre eux,
**caractérisé en ce que**
- le tissu de fond géotextile (10) est divisé en au moins deux segments (14) dans la zone de l'ouverture de remplissage (11), chaque segment (14) étant replié vers l'extérieur par l'intermédiaire d'au moins un élément bourrelet (12),
- et **en ce que** l'élément bourrelet (12) est arrêté par complémentarité de forme sur au moins un bord d'appui sur l'anneau de bridage (20 ; 20' ; 20'' ; 20''') et/ou sur l'anneau de support (30 ; 30' ; 30'' ; 30''').

2. Tissu de fond géotextile (10) selon la revendication 1, **caractérisé en ce que** tous les segments (14) entourent un élément bourrelet (12) annulaire commun.

3. Tissu de fond géotextile (10) selon la revendication 1, **caractérisé en ce que** plusieurs éléments bourrelets sont présents, qui sont chacun entourés par un ou plusieurs segments.

4. Tissu de fond géotextile (10) selon la revendication 2 ou 3, **caractérisé en ce que** l'élément bourrelet (12) est formé à partir d'un profilé en matière plastique muni d'un talon de couture, le talon de couture étant agencé dirigé vers l'extérieur et divisé en une pluralité de segments individuels (14), qui sont cousus avec le tissu de fond géotextile (10).

5. Tissu de fond géotextile (10) selon l'une quelconque des revendications 1 à 4, **caractérisé en ce que** l'anneau de bridage (20 ; 20'; 20''') et/ou l'anneau de support (30 ; 30' ; 30''') sont reliés l'un à l'autre par l'intermédiaire d'un moyen de liaison agencé à l'extérieur de la périphérie de l'au moins un élément bourrelet (12) et traversant le tissu de fond géotextile (10).

6. Tissu de fond géotextile (10) selon l'une quelconque des revendications 1 à 4, **caractérisé en ce que** l'anneau de bridage (20'') et/ou l'anneau de support (30'') sont reliés l'un à l'autre par l'intermédiaire d'un moyen de liaison agencé à l'intérieur de l'élément bourrelet (12).

7. Tissu de fond géotextile (10) selon l'une quelconque des revendications 1 à 6, **caractérisé en ce que** l'au moins un élément bourrelet (12) est agencé à l'intérieur de la périphérie intérieure de l'anneau de bridage (20''') et/ou de l'anneau de support (30''') et **en ce que** le bord d'appui est formé par la périphérie intérieure de l'anneau de bridage (20) et/ou de l'anneau de support (30).

8. Tissu de fond géotextile (10) selon l'une quelconque des revendications 1 à 6, **caractérisé en ce que** l'au moins un élément bourrelet (12) est agencé au moins partiellement dans une rainure (21 ; 21' ; 21'') dans l'anneau de bridage (20 ; 20' ; 20'') et/ou dans l'anneau de support (30 ; 30' ; 30'') et **en ce que** le bord d'appui est formé par un bord de délimitation de la rainure (21 ; 21' ; 21'').

9. Tissu de fond géotextile (10) selon l'une quelconque des revendications précédentes, **caractérisé en ce qu'**un embout de guidage de tuyau (40) est disposé sur l'anneau de bridage (20 ; 20' ; 20'' ; 20''').

10. Tissu de fond géotextile (10) selon la revendication 9, **caractérisé en ce que** l'embout de guidage de tuyau (40) est formé en un tissu géotextile et **en ce que** l'anneau de bridage (20 ; 20' ; 20'' ; 20''') comprend sur sa périphérie extérieure au moins une rainure extérieure (23 ; 23' ; 23" ; 23'''), dans laquelle un anneau de serrage (50) pour la fixation de l'embout de guidage de tuyau (40) pénètre.
